# EUROPEAN PATENT SPECIFICATION

(11) **EP 0 731 026 B1**
(45) Date of publication and mention of the grant of the patent: **26.01.2000**
(21) Application number: 96107000.0
(22) Date of filing: 26.11.1991
(51) Int. Cl.: B65B 51/14

(54) **Carton top sealing mechanism and method**
Kartonverschliessmechanismus und Kartonverschliessverfahren
Mécanisme et procédé de fermeture de boîtes en carton

(30) Priority: 04.12.1990 US 622005
(43) Date of publication of application: 11.09.1996
(62) Divisional of application: 91310869.2
(73) Proprietor: ELOPAK SYSTEMS AG, 8152 Glattbrugg (CH)
(72) Inventor: Esper, Leo Joseph, Troy, Michigan 48098 (US)
(74) Representative: Burrows, Anthony Gregory

(56) References cited:
- EP-A- 0 097 984
- EP-A- 0 203 572
- FR-A- 2 330 595
- US-A- 2 859 796
- US-A- 4 193 341
- US-A- 4 735 031

## Description

This invention relates generally to carton top sealing mechanisms and methods, more particularly to a carton top sealing mechanism and method utilizing a pneumatic membrane.

Currently, plastic-coated paperboard gable top carton seals are created in the following manner. The plastic coating on the paperboard carton is heat-activated in any suitable manner, such as hot air, radiated heat, or ultrasonic vibration, to a point at which the plastic is tacky. The carton panels are folded and guided together, and then squeezed and cooled, until the seal takes a set. Sufficient pressure must be applied during the sealing operation to extrude the softened plastic, to fill the pockets and voids created by the folded and abutting multiple paperboard layers.

Depending upon the number of cartons to be squeezed at one time, a few thousand to many thousands of Newtons (several hundred to a few thousand pounds of force) must be transmitted to the jaws, to generate this pressure. The stroke requirement for the jaws is approximately 5/8 centrimetre (1/4 inch).

The force applied to the jaws to squeeze the cartons is generated by either a straight push, or a leverage/linkage driven design. The straight push design requires large, relatively expensive pneumatic cylinders to push the sealing jaws. The leverage/linkage driven designs can utilize smaller pneumatic cylinders, or a cam, to actuate a linkage system, utilizing leverage ratios to generate the required force at the sealing jaws. However, the linkage components, pivot mounts, and lubrication requirements are generally quite expensive for this method also.

EP-A-0203572 discloses a portable sealing apparatus for the sealing of plastic-coated paperboard cartons, including a frame and a fixed jaw mounted thereto. A single movable jaw is utilized to seal top portions of the carton by fusing of a polyethylene coating thereon. The movable jaw is driven by a lever linkage controlled by an eccentric drive roller rotated by an electrical motor by way of a gear box and a belt-and-sprockets transmission. A guide channel for the bottom of the carton enables manual placement of the carton with the sealable portions thereon disposed between the fixed and movable jaws. The top portions of the carton are guided between the jaws by guides formed at one end with laterally inwardly converging entrance surfaces. The jaws are generally spaced apart a distance of approximately 5/8 of a centimetre (approximately 1/4 of an inch). Proper selection of pressure, time and controlled heating of the jaws enables the carton to remain adjacent the fixed jaw before, during and after the sealing thereof, without subsequent remelting of the polyethylene coating and opening of the seal for a period of time.

US-A-4,735,031, includes a pressing punch (Figures 13 and 14) which is pushed by a flexible hose or tube containing a medium under a definite pressure toward a pressing table 55 to weld two folded-over layers of a container collar together.

US-A-2,859,796 discloses two flexible tubes (Figures 3 and 4) which, when inflated, move heated resilient material into engagement with a workpiece, such as two plies of heat-sealable ends of a pouch, to seal the same.

US-A-3,808,968 is typical of press devices wherein inflatable hoses are utilized in conjunction with platens to bind two superposed flat articles.

US-A-4193341 discloses a platen for a press used to join, by way of a thin layer of uncured vulcanizable material, two sheets of rubber or rubber-like material. The platen comprises a housing having a recess therein, an inflatable tubular member being received in the recess. When the inflatable member is inflated, it acts as a pressure applying member on an elongate strip of flexible material, such as synthetic rubber, which itself acts directly on the workpiece. The strip and the tubular member are retained in position in the recess by means of a skirt secured to the housing. The housing is secured to a vertically movable ram. An oppositely disposed lower platen is fixed and includes an inverted-channel-form member containing an electrical heating element supported upon an insulating layer of fibrous lagging material itself supported upon a rigid layer of thermally insulating material, which directly supports the inverted-channel-form member. The press may be used for all types of pressing operations alternatively to vulcanization, for example as a brake-press for forming sheet metal. The press may be provided with one or two platens of the kind containing an inflatable member.

According to one aspect of the present invention, there is provided a sealing mechanism for sealing top sealing fins of thermoplastic-coated paperboard cartons, said mechanism comprising a fixed sealing jaw, an oppositely disposed movable sealing jaw, and drive means operatively connected to said movable sealing jaw to move said movable sealing jaw and squeeze the sealing fins between the fixed and movable jaws to seal the fins, characterized in that said mechanism further comprises cooling means arranged to cool the jaws and thus to cool and seal the top sealing fins which arrive between said jaws in a heated condition, and in that said drive means comprises a pneumatic membrane and duct means for supplying pneumatic fluid under pressure to said membrane to expand said pneumatic membrane when the heated sealing fins are positioned intermediate the fixed and movable jaws.

According to another aspect of the present invention, there is provided a method of sealing top sealing fins of a thermoplastic-coated paperboard carton, comprising
providing a sealing mechanism comprising a fixed sealing jaw, an oppositely disposed movable sealing jaw, and drive means operatively connected to said movable sealing jaw,
displacing said fins-to between the fixed and movable jaws, and
moving the movable sealing jaw to squeeze the sealing fins between the fixed and movable jaws to seal the fins, while the fins are in a heated condition,
characterized by
providing said drive means as a pneumatic membrane and means for expanding said membrane,
heating said sealing fins before said displacing of the heated fins, and
cooling said jaws and thus cooling and sealing said fins while said fins are squeezed between said jaws.

Owing to the invention, it is possible to provide an improved, efficient and simplified carton top sealing mechanism, in particular one utilizing a pneumatic membrane, in lieu of mechanical drives or air cylinders, to actuate oppositely disposed sealer jaws. The pneumatically actuated membrane is operatively connected to a movable sealing jaw for urging the same into engagement with carton gable top sealing panels positioned between the movable jaw and a stationary jaw.

In order that the invention may be clearly and completely disclosed, reference will now be made, by way of example, to the accompanying drawings, in which:-
Figure 1 is a fragmentary side elevational schematic view of a carton top sealing mechanism;
Figure 2 is an exploded, detailed view of the carton top sealing mechanism;
Figure 3 is a cross-sectional view of a pneumatic membrane component of the carton top sealing mechanism in one operational condition;
Figure 4 is a cross-sectional view of the pneumatic membrane component in another operational condition;
Figure 5 is a side elevational view similar to Figure 1, illustrating an alternate embodiment;
Figure 6 is a top plan view of the alternate embodiment; and
Figure 6A is an enlarged detail of Figure 6.

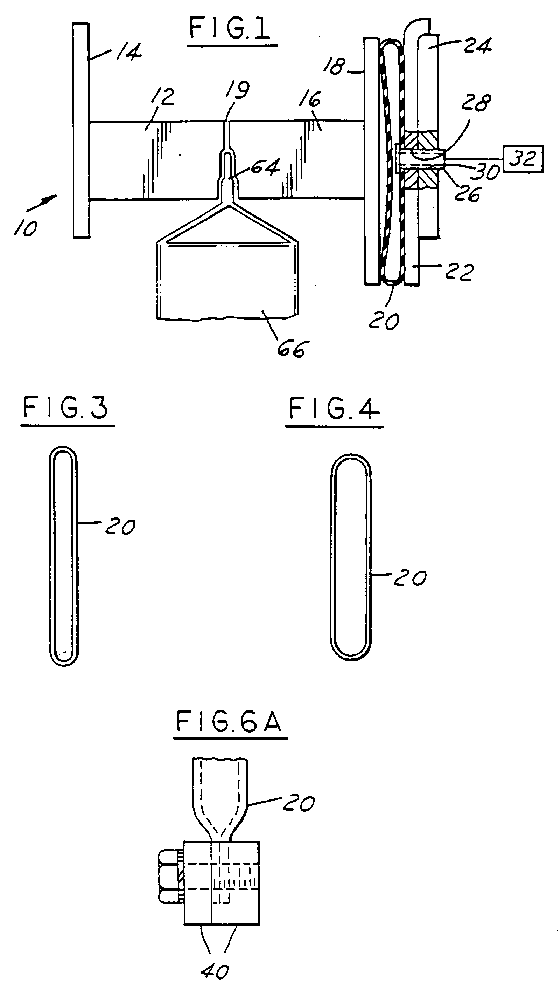

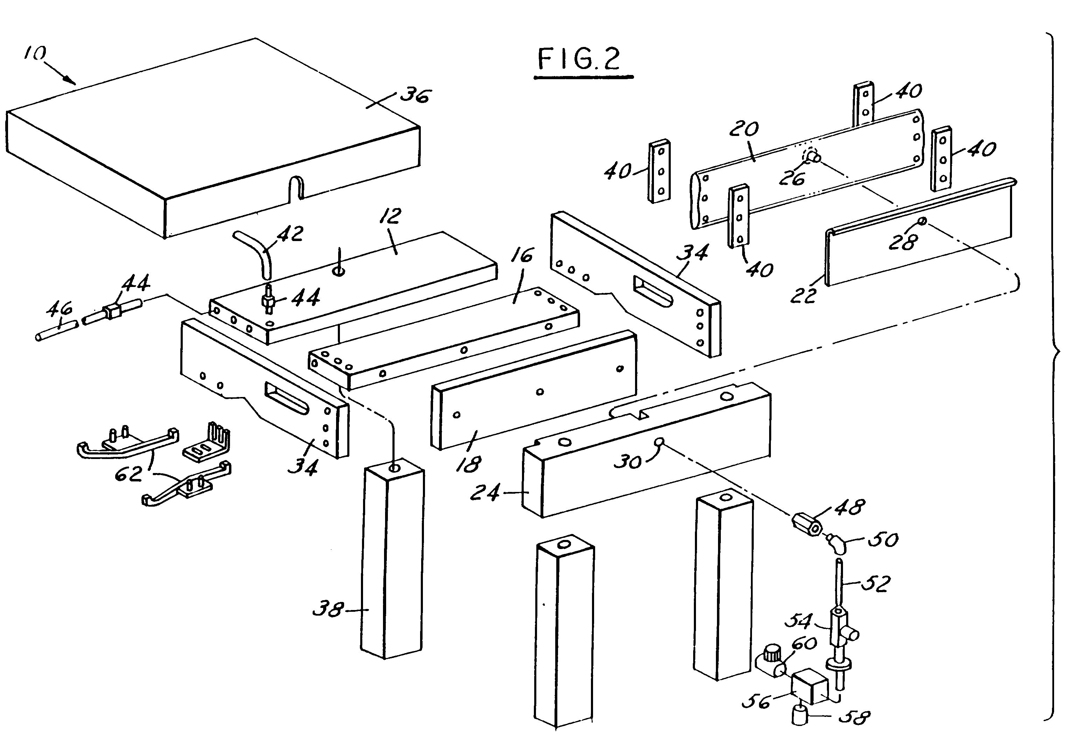

Referring now to the drawings in greater detail, Figure 1 illustrates a carton top sealing mechanism 10 including a horizontally oriented stationary jaw 12 extending from a fixed support member 14. An oppositely disposed, horizontally oriented movable jaw 16 extends from a movable pressure plate 18. It is well-known that the oppositely disposed faces 19 of respective sealing jaws may be contoured to accommodate variable thicknesses therebetween.

A pneumatic bladder or membrane 20 is mounted between the movable pressure plate 18 and a fixed pressure plate 22 secured to a support member 24. An inlet tube 26 extends from the pneumatic membrane 20 through aligned openings 28 and 30 formed in the pressure plate 22 and the support member 24, respectively. The inlet tube 26 is connected to a source of air under pressure, represented as 32.

Figure 2 illustrates the above-referenced elements 12, 16, 18, 20, 22, 24, 26, 28 and 30 in more detail, along with a pair of oppositely disposed side support members 34, a cover member 36, supporting legs 38, and two pairs of pinch blocks 40 positioned at opposite ends of the pneumatic membrane 20 between the movable and fixed pressure plates 18 and 22, respectively.

For water cooled stationary and moving jaws 12 and 16, respectively, a coolant line 42, suitable fittings 44, and a return line 46 would be provided for each.

In between the inlet tube 26 and the source 32 of air under pressure, various typical pneumatic connector and control components are utilized such as a nut 48, an elbow 50, a tube 52, a speed control unit 54, a pneumatic valve 56, a muffler 58, and a pressure regulator 60.

Suitable converging closing rails 62 (Figure 2) may serve to bring the usual sealing fins 64 of a gable top carton 66 into close proximity to one another just before entering the space between the jaws 12 and 16, preventing any jam therewith.

In operation, once the sealing fins 64 (Figure 1) of a typical gable top carton 66 are indexed into a position intermediate the spaced-apart stationary and movable sealing jaws 12 and 16, respectively, a suitable signal is transmitted to the pneumatic valve 56. The pressure regulator 60 supplies a predetermined pressure, e.g. 450KPa (65 psi), via the tube 52, elbow 50, and inlet tube 26 to the interior of the membrane 20, to thereby cause the latter to expand from a condition represented in Figure 3 to that represented in Figure 4, resulting in approximately 5/8 centimetre (1/4 inch) of horizontal stroke.

This actuation forces the movable jaw 16 laterally to engage the container sealing fins 64 between the fixed and movable jaws 12 and 16, respectively. Inasmuch as, in the usual forming, filling and sealing machine, the sealing fins 64 of thermoplastic coated paperboard cartons 66 are heated prior to entering the sealing area, the resultant squeezing operation between the jaws 12 and 16 serves to create a liquid tight seal between the sealing fins.

A predetermined plurality of aligned cartons 66 may be indexed by a conventional conveyor (not shown) into position between the oppositely disposed jaws 12 and 16, along the lengths thereof, prior to causing the expansion of the pneumatic membrane 20.

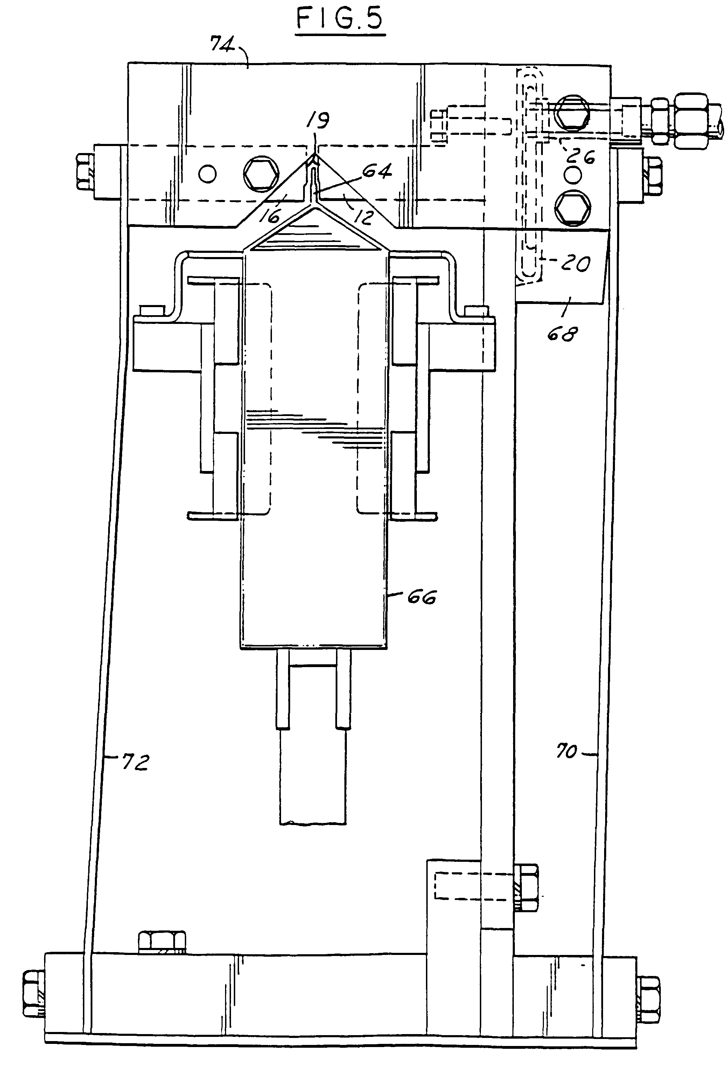

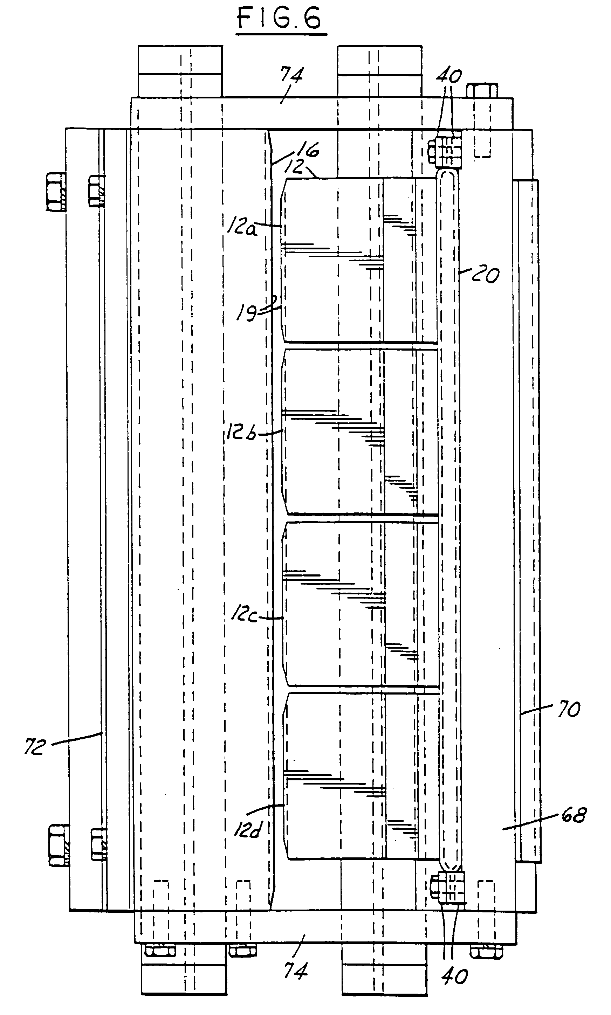

Referring now to Figures 5, 6 and 6A, there is shown an alternate embodiment wherein all elements comparable to elements of the Figures 1-4 embodiment bear the same reference numerals. In addition, it will be noted that the positions of the stationary and movable jaws 12 and 16, respectively, have been reversed. In this embodiment, the membrane 20 expands to the right in Figure 5, moving a movable pressure plate 68 to the right, against the force of a spring support member 70 supporting the pressure plate 68, causing connector plates 74 to move the movable jaw 16 to the right to engage the sealing fins 64 between the oppositely disposed faces 19 to seal same. This action bows a second spring support member 72 serving to support the movable jaw 16. Once the membrane is deflated, the spring members 70 and 72 return the pressure plate 68 and the movable jaw 16 to their respective leftward positions.

As shown in Figure 6, it is more apparent that from one to four cartons 66 may be aligned between and sealed by the action of the movable jaw 16, against the fixed jaw 12. The latter, in this embodiment, is formed to include four semi-rigidly fixed segments 12a, 12b, 12c and 12d, which are adapted to permit three cartons, for example, to be sealed in the event there is a fourth defective carton in place.

As shown in Figure 6A, the ends of the membrane 20 are confined between the oppositely disposed pinch blocks 40.

It should be apparent that there has been described with reference to the drawings an efficient and simplified carton top sealing mechanism for use with heat-activated thermoplastic-coated paperboard cartons processed on conventional forming, filling and sealing machines. More specifically, the geometric "footprint" or area of the pneumatic membrane is such that it is applied uniformly to the movable sealing jaw to thus permit more compact machine designs. Additionally, since the membrane does not include any frictional or rubbing components, smoother and more readily repeatable stroke acceleration characteristics are possible as compared to mechanical or air cylinder type drive arrangements. Furthermore, the membrane, being an unconstrained device, does not require critical mounting or alignment.

## Claims

1. A sealing mechanism for sealing top sealing fins (64) of thermoplastic-coated paperboard cartons (66), said mechanism comprising a fixed sealing jaw (12), an oppositely disposed movable sealing jaw (16), and drive means (20,26) operatively connected to said movable sealing jaw (16) to move said movable sealing jaw (16) and squeeze the sealing fins (64) between the fixed and movable jaws (12,16) to seal the fins (64), characterized in that said mechanism further comprises cooling means (42-46) arranged to cool the jaws (12,16) and thus to cool and seal the top sealing fins (64) which arrive between said jaws (12,16) in a heated condition, and in that said drive means (20,26) comprises a pneumatic membrane (20) and duct means (26) for supplying pneumatic fluid under pressure to said membrane (20) to expand said pneumatic membrane (20) when the heated sealing fins (64) are positioned intermediate the fixed and movable jaws (12,16).

2. A sealing mechanism according to claim 1, wherein said cooling means (42-46) comprises a coolant line (42) and a return line (46) .

3. A sealing mechanism according to claim 1 or 2, and further comprising a pair of movable and fixed pressure plates (18,22;68) for confining said membrane (20) therebetween, said movable pressure plate (18;68) being operatively connected to said movable sealing jaw (16).

4. A sealing mechanism according to claim 3, and further comprising a connector plate (74) interconnecting said movable pressure plate (68) and said movable jaw (16).

5. A sealing mechanism according to claim 3 or 4, and further comprising a pair of spring members (70,72) supporting said movable pressure plate (68) and said movable sealing jaw (16), respectively, and serving to return said movable pressure plate (68) and said movable sealing jaw (16) to their original positions when said membrane (20) is deflated.

6. A sealing mechanism according to any preceding claim, and further comprising converging rails (62) positioned so as to urge said sealing fins (64) into close proximity to one another in order to enter the space intermediate said fixed and movable sealing jaws (12,16).

7. A sealing mechanism according to any preceding claim, wherein said pneumatic membrane (64) is capable of expanding by of the order of five-eighths of a centimetre (one-fourth of an inch).

8. A method of sealing top sealing fins (64) of a thermoplastic-coated paperboard carton, comprising
providing a sealing mechanism comprising a fixed sealing jaw (12), an oppositely disposed movable sealing jaw (16), and drive means (20,26) operatively connected to said movable sealing jaw,
displacing said fins (64) to between the fixed and movable jaws (12,16), and
moving the movable sealing jaw (16) to squeeze the sealing fins (64) between the fixed and movable jaws (12,16) to seal the fins (64), while the fins (64) are in a heated condition,
characterized by
providing said drive means (20,26) as a pneumatic membrane (20) and means (26) for expanding said membrane (20),
heating said sealing fins (64) before said displacing of the heated fins (64), and
cooling said jaws (12,16) and thus cooling and sealing said fins (64) while said fins (64) are squeezed between said jaws (12,16).

9. A method according to claim 8, wherein said cooling is performed using a coolant introduced by way of a coolant line (42) and returned by way of a return line (46).

10. A method according to claim 8 or 9, wherein said displacing includes displacing said fins (64) towards each other into close proximity to each other after said heating and before said fins (64) enter the space between said jaws (12,16).

## Patentansprüche

1. Siegelmechanismus zum Siegeln oberer Siegellaschen (64) mit Thermoplast beschichteter Pappkartons (66), wobei der Mechanismus eine feststehende Siegelbacke (12), eine gegenüberliegend angeordnete bewegbare Siegelbacke (16) und eine Antriebseinrichtung (20, 26) aufweist, die betriebsmäßig mit der bewegbaren Siegelbacke (16) verbunden ist, um die bewegbare Siegelbacke (16) zu bewegen und die Siegellaschen (64) zum Siegeln der Laschen (64) zwischen der feststehenden und der bewegbaren Siegelbacke (12, 16) zu klemmen, dadurch gekennzeichnet, daß der Mechanismus ferner eine Kühleinrichtung (42-46) zum Kühlen der Backen (12, 16) und somit zum Kühlen und Siegeln der oberen Siegellaschen (64), die im erwärmten Zustand zwischen die Backen (12, 16) gelangen, aufweist, und daß die Antriebseinrichtung (20, 26) eine pneumatische Membran (20) und eine Kanaleinrichtung (26) zum Liefern druckbeaufschlagten pneumatischen Fluids an die Membran (20) aufweist, um die pneumatische Membran (20) zu dehnen, wenn die erwärmten Siegellaschen (64) zwischen der feststehenden und der bewegbaren Backe (12, 16) angeordnet sind.

2. Siegelmechanismus nach Anspruch 1, bei dem die Kühleinrichtung (42-46) eine Kühlmittelleitung (42) und eine Rücklaufleitung (46) aufweist.

3. Siegelmechanismus nach Anspruch 1 oder 2, und ferner mit einem Paar aus einer feststehenden und einer bewegbaren Platte (18, 22; 68) zum Einschließen der Membran (20) zwischen diesen, wobei die bewegbare Druckplatte (18; 68) betriebsmäßig mit der bewegbaren Siegelbacke (16) verbunden ist.

4. Siegelmechanismus nach Anspruch 3, und ferner mit einer Verbindungsplatte (74), welche die bewegbare Druckplatte (68) und die bewegbare Backe (16) miteinander verbindet.

5. Siegelmechanismus nach Anspruch 3 oder 4, und ferner mit zwei Federelementen (70, 72) zum Stützen der bewegbaren Druckplatte (68) und der bewegbaren Siegelbacke (16), wobei die Federelemente jeweils dazu dienen, die bewegbare Druckplatte (68) und die bewegbare Siegelbacke (16) in ihre Ausgangspositionen zurückzustellen, wenn die Membran (20) entspannt ist.

6. Siegelmechanismus nach einem der vorhergehenden Ansprüche, und ferner mit konvergierenden Schienen (62), die derart positioniert sind, daß sie die Siegellaschen (64) in enge Annäherung aneinander bringen, so daß diese in den zwischen der feststehenden und der bewegbaren Siegelbacke (12, 16) bestehenden Raum eintreten können.

7. Siegelmechanismus nach einem der vorhergehenden Ansprüche, bei dem die pneumatische Membran (64) in der Lage ist, sich in der Größenordnung von fünf Achtel Zentimeter (ein Viertel Inch) auszudehnen.

8. Verfahren zum Siegeln von oberen Siegellaschen (64) eines mit Thermoplast beschichteten Pappkartons, mit den folgenden Schritten:
- Bereitstellen eines Siegelmechanismus mit einer feststehenden Siegelbacke (12), einer gegenüberliegend angeordneten bewegbaren Siegelbacke (16) und einer Antriebseinrichtung (20, 26), die betriebsmäßig mit der bewegbaren Siegelbacke verbunden ist,
- Verschieben der Laschen (64) zwischen die feststehende un die bewegbare Backe (12, 16), und
- Bewegen der bewegbaren Siegelbacke (16) zum Klemmen der Siegellaschen (62) zwischen der feststehenden und der bewegbaren Backe (12, 16), um die Laschen (64) im erwärmten Zustand der Laschen (64) zu siegeln,
gekennzeichnet durch
das Ausbilden der Antriebseinrichtung (20, 26) als pneumatische Membran (20) und Einrichtung (26) zum Ausdehnen der Membran (20),
das Erwärmen der Siegellaschen (64) vor dem Verschieben der erwärmten Laschen (64), und
das Kühlen der Backen (12, 16) und somit das Kühlen und Siegeln der Laschen (64), während die Laschen (64) zwischen den Backen (12, 16) geklemmt sind.

9. Verfahren nach Anspruch 8, bei dem das Kühlen unter Verwendung eines über eine Kühlmittelleitung (42) eingeleiteten und über eine Rücklaufleitung (46) abgeführten Kühlmittels erfolgt.

10. Verfahren nach Anspruch 8 oder 9, bei dem das Verschieben beinhaltet, die Laschen (64) nach dem Erwärmen und vor dem Eintreten der Laschen (64) in den Raum zwischen den Backen (12, 16) in enge Annäherung aufeinander zu zu verschieben.

## Revendications

1. Un mécanisme de fermeture pour fermer de manière étanche les ailettes de fermeture supérieures (64) de boîtes en carton revêtues de matières thermoplastiques (66), ledit mécanisme comprenant une mâchoire de fermeture fixe (12), une mâchoire de fermeture mobile disposée de manière opposée (16), et des moyens d'entraînement (20, 26), reliés de manière opérationnelle à ladite mâchoire de fermeture mobile (16) pour déplacer ladite mâchoire de fermeture mobile (16) et presser les ailettes de fermeture (64) entre les mâchoires de fermeture fixe et mobile (12, 16) pour fermer de manière étanche les ailettes (64), caractérisé en ce que ledit mécanisme comprend en outre des moyens de refroidissement (42-46) disposés pour refroidir les mâchoires (12, 16) et ainsi refroidir et fermer de manière étanche les ailettes de fermeture supérieures (64) qui arrivent entre lesdites mâchoires (12, 16) dans un état chauffé, et en ce que lesdits moyens d'entraînement (20, 26) comprennent une membrane pneumatique (20) et des moyens de conduit (26) pour fournir un fluide pneumatique sous pression à ladite membrane (20) afin de dilater ladite membrane pneumatique (20) lorsque les ailettes de fermeture chauffées (64) sont mises en place entre les mâchoires fixe et mobile (12, 16).

2. Un mécanisme de fermeture selon la revendication 1, dans lequel lesdits moyens de refroidissement (42-46) comprennent une ligne de produit réfrigérant (42) et une ligne de retour (46).

3. Un mécanisme de fermeture selon la revendication 1 ou 2, et comprenant en outre une paire de plaques de pression mobile et fixe (18, 22 ; 68) pour enfermer entre elles ladite membrane (20), ladite plaque de pression mobile (16 ; 68) étant reliée de manière opérationnelle à ladite mâchoire de fermeture mobile (16).

4. Un mécanisme de fermeture selon la revendication 3, et comprenant en outre une plaque de liaison (74) reliant entre elles ladite plaque de pression mobile (68) et ladite mâchoire mobile (16).

5. Un mécanisme de fermeture selon la revendication 3 ou 4, et comprenant en outre une paire d'éléments à ressort (70, 72) supportant ladite plaque de pression mobile (68) et ladite mâchoire de fermeture mobile (16), respectivement, et servant à ramener ladite plaque de pression mobile (68) et ladite mâchoire de fermeture mobile (16) dans leur position d'origine lorsque ladite membrane (20) est dégonflée.

6. Un mécanisme de fermeture selon une revendication précédente quelconque, et comprenant en outre des rails convergents (62) mis en place de manière à pousser lesdites ailettes de fermeture (64) en les rapprochant l'une de l'autre de manière à pénétrer dans l'espace entre lesdites mâchoires de fermeture fixe et mobile (12, 16).

7. Un mécanisme de fermeture selon une revendication précédente quelconque, dans lequel ladite membrane pneumatique (64) est capable de se dilater de l'ordre de cinq huitièmes de centimètre (un quart de pouce).

8. Un procédé de fermeture de l'ailette de fermeture supérieur (64) d'une boîte en carton revêtu de matières thermoplastiques comprenant les opérations consistant à :
prévoir un mécanisme de fermeture comprenant une mâchoire de fermeture fixe (12), une mâchoire de fermeture mobile disposée de manière opposée (16), et des moyens d'entraînement (20, 26) reliés de manière opérationnelle à ladite mâchoire de fermeture mobile,
déplacer lesdites ailettes (64) entre lesdites mâchoires fixe et mobile (12, 16), et
déplacer la mâchoire de fermeture mobile (16) pour serrer des ailettes de fermeture (64) entre les mâchoires fixe et mobile (12, 16) afin de fermer de manière étanche les ailettes (64), alors que les ailettes (64) sont dans un état chauffé ;
caractérisé par les opérations consistant à :
prévoir lesdits moyens d'entraînement (20, 26) sous la forme d'une membrane pneumatique (20) et de moyens (26) pour dilater ladite membrane (20),
chauffer lesdites ailettes de fermeture (24) avant ladite opération de déplacement des ailettes chauffées (64), et
refroidir lesdites mâchoires (12, 16) et refroidir ainsi et fermer de manière étanche lesdites ailettes (64) alors que lesdites ailettes (64) sont serrées entre lesdites mâchoires (12, 16).

9. Un procédé selon la revendication 8, dans lequel ladite opération de refroidissement est effectuée en utilisant un produit réfrigérant introduit par l'intermédiaire d'une ligne de produit réfrigérant (42) et ramené par l'intermédiaire d'une ligne de retour (46).

10. Un procédé selon la revendication 8 ou 9, dans lequel ladite opération de déplacement comprend le fait de déplacer lesdites ailettes (64) l'une vers l'autre pour les rapprocher l'une de l'autre après ledit chauffage et avant que lesdites ailettes (64) pénètre dans l'espace entre lesdites mâchoires (12, 16).
